# EUROPEAN PATENT APPLICATION

(11) **EP 0 692 214 A1**
(43) Date of publication of application: **17.01.1996**
(21) Application number: 95201603.8
(22) Date of filing: 15.06.1995
(51) Int. Cl.: A47J 37/12

(54) **Frying device and method for frying products**

(30) Priority: 13.07.1994 EP 94202034
(71) Applicant: UNILEVER N.V., NL-3000 DK Rotterdam (NL); UNILEVER PLC, London EC4P 4BQ (GB)
(72) Inventor: Van Oosten, Cornelis Willem, c/o Unilever Research, NL-3133 AT Vlaardingen (NL); Sonneveld, Peter, c/o Unilever Research, NL-3133 AT Vlaardingen (NL)
(74) Representative: Sikken, Antonius H. J. M.

(57) **Abstract**

A deep frying pan (1) is provided with a device comprising feed means (8) which are connected with a vessel (7) containing an oil improving substance, preferably a flavour solution. When the oil gets exhausted of flavours the device provides a supplementary dose to the frying pan content.

## Description

The present invention relates to a frying device at least comprising a frying pan for containing an amount of frying fat or oil and heating means. Such a device is generally known and used for both shallow- and deep frying of a large variety of products ranging from snacks like chips, fish, croquettes and the like to sweet products like donuts, beignets and the like. During frying the fats or oils used are deteriorated by the relatively high temperature and contamination by the fried products. To alleviate such deterioration effects it is known to add refill-oils, or flavours or other fried product improving components to the oil, to mask certain tastes of odours, or to alter the taste of the oil. (cf: GB 2.250.423; US 4.050.447 and US 4.115.597).

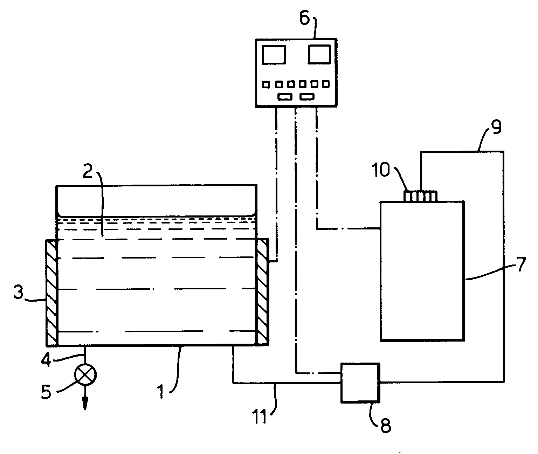

Although these prior techniques are useful, for specific purposes, e.g. for adding refill oil, these methods still have drawbacks if a volatile component must be added. This is due to the fact, that the addition of the improving component or oil is performed by an addition to the top-layer of the hot oil. Application of this principle to the addition of volatile components, such as volatile flavours means, that upon contact with the hot oil most of the volatile component evaporates immediately, and will not be part of the oil-phase. Moreover addition over the top also means, that a stirrer is required in order to distribute the added component over the hot oil. Further addition over the top can give rise to spattering. Another disadvantage is, that the control of the final taste is difficult. The present invention aims to provide a frying device, which makes it possible to add a solution of one or more volatile flavour components to the frying fat or oil in a frying pan, not presenting the disadvantages of the above state of the art, and in which the components can be added in a controlled manner. To this end the frying device according to the invention is characterized in that feed means are present which are connected to the frying pan in or near the bottom thereof to feed a solution of one ore more volatile flavour components into the frying pan during operation. The fats or oils suitable for use in the frying device according to the invention are not limited and comprise all edible oils and fats, both from vegetable and animal origin, natural as well as modified, and blends thereof. The volatile flavour component can be selected from any known volatile flavouring substances. In general the volatile flavour components are added as a solution in the same oil as applied for the frying. Preferably the feed means comprise one or more containers and one or more feed lines connected to the frying pan. Advantageously a control pump is arranged in the feed lines. With the frying device according to the invention it is possible to add volatile flavour components into the frying fat or oil during operation in an extremely controlled fashion, without danger of spattering, while excessive losses of volatile flavour component are avoided. The feed means can deliver the respective component into the frying fat by gravity feed, but preferably the feed means comprise pump means. As the feed means are connected to the frying pan in or near the bottom thereof, mixing of the component will be assured by the vortexes and bubbles created by the frying of products. So the presence of a stirrer is not required and can be omitted. Further it is preferred that the feed means comprise signal means, which are actuated when one of the flavour containers is almost empty. Such signal means can warn a user e.g. by a sound or light signal. Examples of volatile flavouring substances are tallow, lard, peanutoil, synthetic flavouring substances or mixtures thereof. Other possibilities are components which provide a pleasant odour as well as flavour, like lemon juice. It is also possible to add flavour precursors, which are converted into the respective flavour components by the high temperature encountered in the frying fat or oil with which it is mixed. Usually the flavour components are added in an amount of up to 5% by volume of oil. During frying the temperature is usually controlled between 150°C and 210°C and preferably between 160°C and 190°C. The invention further provides a method for frying products using the frying device according to the invention, at least comprising the steps of:
- heating frying fat or oil in the frying pan to a suitable frying temperature;
- actuating the feed means to feed a solution of one or more volatile flavour components into the frying pan via the bottom of the frying pan; and
- frying the products
The advantage of the device and method according to the invention is that during the complete operational frying life of the fats of oils used a constant quality of the fried product is obtained for more than 100 h. Further the so-called "room odour" of a frying process can be substantially reduced. The feed of said components may be continuous or semi-continuous. In the following the invention will be discussed with reference to the enclosed drawing in which the single figure shows a schematic representation of a frying device according to the invention. Reference numeral 1 designates a frying pan containing an amount of frying oil 2. Said frying pan 1 is surrounded by a heating element 3, and comprises a drain 4 with a valve 5 for periodically emptying said pan 1. The heating means of the frying pan, usually also comprising a temperature sensor are connected to a central control unit 6, with the necessary control buttons and displays. Reference numeral 7 designates a container, which in this case contains lard (i.e. a solution of lard flavour in lard fat) as a flavouring substance, to be fed into the frying pan 1. Said feeding is in this case performed by a pump 8, which sucks the flavour solution out of container 7 through a line 9, which runs through the cap 10 of the container 7. Said solution is pumped via line 11 into the bottom of the frying pan 1. The dot-dash lines represent the connections between the respective parts and the control unit 6. The container 7 is connected to the control unit 6, as to provide means for signaling the user, when the container is almost emptied. This can be done by means of a float, weighing the container, or by measuring the power consumption of the pump 8. The signal to warn the user that the container is almost empty can be any signal known, e.g. by sound, light etc. In the figure only one container 7 is shown, in practice more containers can be used, to be able to feed different components into the frying pan simultaneously. Addition of the same lard flavour solution from 7 to the surface of oil 2 led to a considerable room-flavour, due to evaporation of the lard flavour. This is avoided by the process according to the invention.

## Claims

1. Frying device at least comprising a frying pan for containing an amount of frying fat or oil and heating means, characterised in that feed means are present which are connected to the frying pan in or near the bottom thereof, to feed a solution of one or more volatile flavour components into the frying pan during operation.

2. Frying device according to claim 1, characterised in that, the feed means comprise one or more containers and one or more feed lines connected to the frying pan.

3. Frying device according to claim 2, characterised in that a control pump is arranged in the feed lines.

4. Method for frying products using the frying device according to one or more of the claims 1-3, at least comprising the steps of:
- heating frying fat or oil in the frying pan to a suitable frying temperature;
- actuating the feed means to feed a solution of one or more volatile flavour components into the frying pan via the bottom of the frying pan; and
- frying the products
